# EUROPEAN PATENT APPLICATION

(11) **EP 2 595 022 A1**
(43) Date of publication of application: **22.05.2013**
(21) Application number: 11806430.2
(22) Date of filing: 16.06.2011
(51) Int. Cl.: G05B 23/02, H02J 3/00, H02J 13/00

(54) **MONITORING CONTROL SYSTEM FOR ELECTRICAL POWER EQUIPMENT**

(30) Priority: 16.07.2010 JP 2010162110
(71) Applicant: Kabushiki Kaisha Toshiba, Minato-ku Tokyo 105-8001 (JP)
(72) Inventor: HIROSE, Akinori, Tokyo 105-8001 (JP); NAGATA, Junya, Tokyo 105-8001 (JP)
(74) Representative: Fritsche, Daniel
(86) International application number: PCT/JP2011/003447
(87) International publication number: WO 2012/008093

(57) **Abstract**

An electric power facility control and monitoring system allows an operator of a substation to perform a task of operating an electric power system according to the situation irrespective of the practical ability or experience of the operator. The electric power facility control and monitoring system includes: a rule storage unit in which as a rule relating to an event occurring in a power station, an identifier of a device where the event has occurred, an operation status of the device, a numerical value indicating an importance level of the operation status of the device, and a control content for the device are set; a diagram storage unit in which a wiring diagram or layout diagram of the device in the power station is stored dividedly for each circuit; an automatic selection unit which, when notification of the event occurred in the power station is received, retrieves from the diagram storage unit a wiring diagram or layout diagram of a section of a bay including an identifier of a device having a rule in the rule storage unit matching a content of the event notification; and a display control unit which outputs to a monitor the wiring diagram or layout diagram retrieved by the automatic selection unit.

## Description

### FIELD

Embodiments described herein relate to an electric power facility control and monitoring system for assisting restoration when a failure has occurred in a facility of an electric power system installed, for example, in a power station or a substation.

### BACKGROUND

Generally, a control and monitoring system is configured such that when a failure has occurred in an electric power system facility, an operator grasps the situation based on an alarm or a screen display and performs a screen operation. As the conventional control and monitoring system, there is a "fault-time operation support device and electric power system supervisory/fault-time operation support system" that, upon detection of occurrence of a fault from information supervised by the electric power system control and monitoring system when the fault has occurred in the electric power system facility, extracts a fault pattern based on supervised information and supports the operator through fault handling guidance corresponding to the extracted fault pattern (See Patent Reference 1).

### RELEVANT REFERENCES

### PATENT REFERENCES

Patent Reference 1: JP-A 2002-142362 (KOKAI; page 7; abstract page 5; and so on)

### SUMMARY

The guidance in the above-desribed supervisory conrol system is merely sounding of an alarm and display of a message (text data) indicating a change in state on a screen when the state of the device under supervision is changed, so that the operator does not reach grasping of the status of the device such as how and which power system has changed even if the operator notices the alarm and looks at the display content on the screen. The operator can come to understand the situation only after confirming the screen and then operating a terminal for supervision to call relevant information from a data base and display the information on the screen.

Therefore, a delay until grasping the situation and erroneous grasp of the situation are possibly made depending on the practical ability (skill) and experience of the operator, failing to perform accurate power system operation and possibly bringing about a problem of recduction in quality of electric power.

Embodiments have been made to solve the problem and its object is to provide an electric power facility control and monitoring system with which an operator of an electric power facility can perform a task of operating an electric power system according to the situation irrespective of the practical ability and experience of the operator.

To solve the above problem, an electric power facility control and monitoring system of an embodiment, includes: a rule storage unit in which as a rule relating to an event occurring in a power station, an identifier of a device where the event has occurred, an operation status of the device, a numerical value indicating an importance level of the operation status of the device, and a control content for the device are set; a diagram storage unit in which a wiring diagram or layout diagram of the device in the power station is stored for each circuit; an automatic selection unit which, when notification of the event occurred in the power station is received, retrieves from the diagram storage unit a wiring diagram or layout diagram of a section of a bay including an identifier of a device having a rule in the rule storage unit matching a content of the event notification; and a display control unit which outputs to a monitor the wiring diagram or layout diagram retrieved by the automatic selection unit.

According to the embodiment, an operator of an electric power facility can perform a task of operating an electric power system according to the situation irrespective of the practical experience of the operator.

### BRIEF DESCRIPTION OF THE DRAWINGS

[Fig. 1] Fig. 1 is a diagram illustrating a configuration of a substation control and monitoring system of a first embodiment.
[Fig. 2] Fig. 2 is a diagram illustrating an example of a screen selection basic rule.
[Fig. 3] Fig. 3 is a diagram illustrating an example of a screen image to be displayed and outputted.
[Fig. 4] Fig. 4 is a flowchart illustrating an operation of the substation control and monitoring system of the first embodiment.
[Fig. 5] Fig. 5 is a diagram illustrating a configuration of a substation control and monitoring system of a second embodiment.
[Fig. 6] Fig. 6 is a flowchart illustrating an operation of the substation control and monitoring system of the second embodiment.
[Fig. 7] Fig. 7 is a diagram illustrating a configuration of a substation control and monitoring system of a third embodiment.
[Fig. 8] Fig. 8 is a diagram illustrating an example of a screen of a basic rule customization function.
[Fig. 9] Fig. 9 is an example of a screen display method selection screen of the basic rule customization function.
[Fig. 10] Fig. 10 is a diagram illustrating a configuration of a substation control and monitoring system of a fourth embodiment.
[Fig. 11] Fig. 11 is a diagram illustrating a configuration of a substation control and monitoring system of a fifth embodiment.
[Fig. 12] Fig. 12 is a diagram illustrating an example of a form to be outputted.
[Fig. 13] Fig. 13 is a diagram illustrating an example of a screen of a form customization function.
[Fig. 14] Fig. 14 is a diagram illustrating a configuration of a substation control and monitoring system of a sixth embodiment.

### DETAIELD DESCRIPTION

Hereinafter, embodiments of a substation control and monitoring system that is one of electric power facility control and monitoring systems will be described referring to the drawings.

### (First Embodiment)

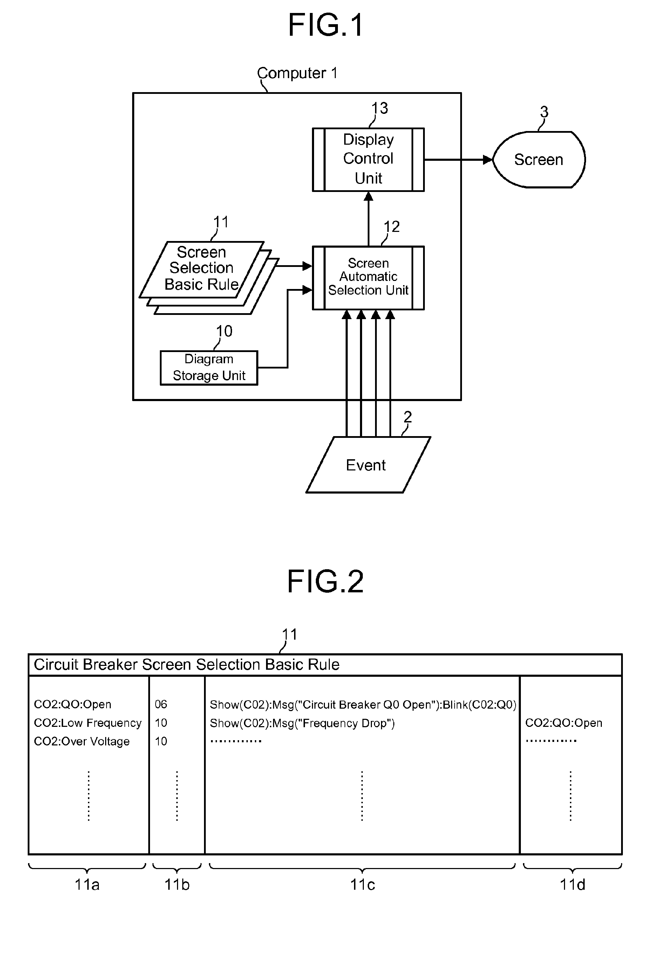

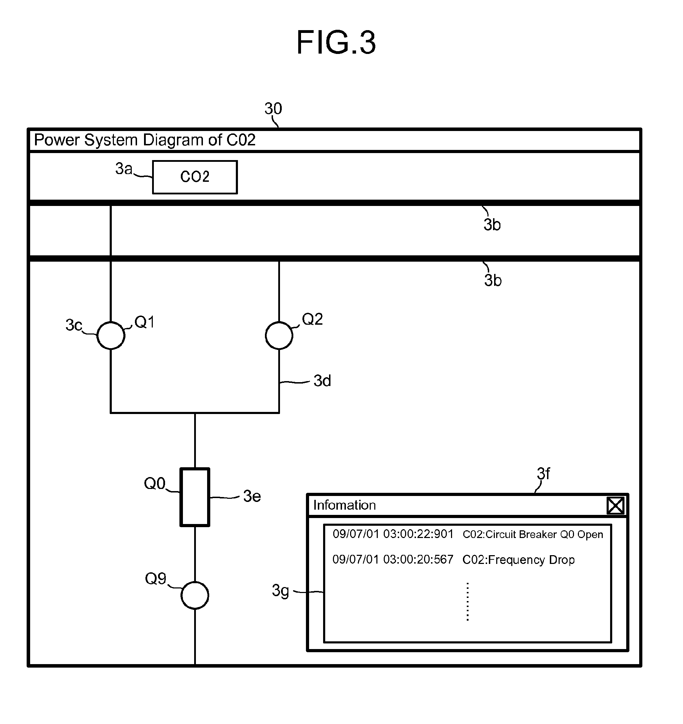

A substation control and monitoring system of a first embodiment will be described referring to Fig. 1 to Fig. 4. Fig. 1 is a system configuration diagram of a substation control and monitoring system of the first embodiment, Fig. 2 is a diagram illustrating an example of a screen selection basic rule for an event 2 occurring in a circuit breaker, and Fig. 3 is a diagram illustrating an example of a screen image.

As illustrated in Fig. 1, a computer 1 as a screen control device of a substation control and monitoring system includes a diagram storage unit 10, a screen selection basic rule storage unit 11, a screen automatic selection unit 12, and a display control unit 13. To the computer 1, a monitor 3 is connected. The monitor 3 is, for example, a liquid crystal display device or the like and displays information inputted thereto on a screen.

The computer 1 receives an occurring event 2 from a substation device and a unit constituting the substation control and monitoring system, and displays information according to the situation of occurrence of the event (a wiring diagram of a corresponding bay, a layout diagram of devices and so on), as an output, on the screen of the monitor 3 to an operator of an electric power facility such as the substation. The bay means a circuit divided for each power system in the substation.

In the screen selection basic rule storage unit 11, screen selection basic rules are stored. The screen selection basic rule is a rule (information) for causing an operation according to the event 2 using the received event 2 as a key value. An example of the screen selection basic rule for the event 2 occurring in the circuit breaker is illustrated in Fig. 2.

As illustrated in Fig. 2, the screen selection basic rule is screen display information to be displayed on the screen at occurrence of an event of notifying of a change in device state including the open/close status of the circuit breaker, a change in state of the electric power system such as frequency drop or overcurrent, abnormal transmission of a network, a failure of a control terminal, and a change in state of each of units constituting the substation control and monitoring system such as an error of a printer.

The screen automatic selection unit 12 collates the event 2 received from the device of the substation with the event content that is the key value of the screen selection basic rule, and selects information to be displayed on the screen, and a control content when device control is necessary.

The display control unit 13 calls a diagram for specifying the layout of the device selected by the screen automatic selection unit 12 from the diagram storage unit 10, interprets its screen information, and automatically displays the interpreted screen information on the display screen.

Fig. 3 is an example of the screen image displayed on the display screen. The substation control and monitoring system receives a signal indicating a state from each device such as a circuit breaker of a power transmission line installed in the substation, and automatically displays guidance on the screen based on the state change occurred in each device. Hereinafter, the change in state of the device that is a supervisory target supervised by the computer 1 is called an "event".

Next, the operation of the substation control and monitoring system will be described. In the substation control and monitoring system, when the notification of occurrence of an event is received by the computer 1 and the screen automatic selection unit 12 detects the occurrence of the event, the screen automatic selection unit 12 collates the content of the event notification with the rules in the screen selection basic rule storage unit 11, calls a wiring diagram or layout diagram of a section of a bay including an identifier of the device having a rule matching the content of the event notification, from the diagram storage unit 10, and passes it to the display control unit. Concurrently therewith, the screen automatic selection unit 12 interprets information existing in the rule from the content of the event notification, and notifies the display control unit 13 of a screen display method. According to the wiring diagram or layout diagram received from the screen automatic selection unit 12 and the screen display method, the display control unit 13 converts the wiring diagram or layout diagram into a data format that is capable of displaying the wiring diagram or layout diagram and outputs the converted wiring diagram or layout diagram to the monitor 3.

Here, the screen selection basic rule will be described in detail. The rule (information) saved in the screen selection basic rule storage unit 11 is information which uses an event content 11a which can occur in a device in the substation or a unit constituting the substation control and monitoring system as the key value and is constituted of a set of information corresponding to the key value.

The information corresponding to the event content 11a includes, for example, an event level 11b indicating the importance level of the event, display screen information 11c displayed on the screen, a control content 11d performed on the substation device and so on. Note that as the control content 11d, a character indicating unnecessity of control such as null character is inputted when control is unnecessary.

Further, the event level 11b is classified into 10 levels of "01" to "10" and the importance level is higher as a numerical value is higher.

For example, events with lower importance levels (event level 11b: "01" to "06") are general events such as operation record, whereas events with higher importance levels (event level 11b: "07" to "10") are urgent events such as failure of the substation device and device defect in each of the units constituting the substation control and monitoring system.

The screen display information 11c expresses the display method by description that can be interpreted by the screen automatic selection unit 12, for example, such as functions. In the example of Fig. 2, the screen display information 11c on the first line of the screen selection basic rule 11 is "Show(C02):Msg ("Circuit Breaker Q0 Open"):Blink(C02:Q0)". In the example of the screen display information 11c, ":" expresses the delimiter between the functions.

The functions indicate the screen display methods respectively and are expressions interpreted respectively by the screen automatic selection unit 12 such that "Show(C02)" means "display on the screen a power system diagram of a bay C02 designated as an argument", "Msg("Circuit Breaker Q0 Open")" means "display on the screen "Circuit Breaker Q0 Open" that is designated as an argument as message information", and "Blink(C02:Q0)" means "blink the circuit breaker Q0 of the bay C02 designated as an argument".

Here, the bay indicates the circuit leading to the power transmission line branched off from a busbar in the substation or the transformer. In the example of the screen selection basic rule 11 in Fig. 2, the rule of one set on each line with the event content 11a, the event level 11b, the display screen information 11c, and the control content 11d in order from the left is expressed. Further, when the screen selection basic rule 11 is a text file, a delimiter character "," is used to divide pieces of information.

For example, when the event that is the key value is "C02:Q0:Open" that means the circuit breaker Q0 is open, the event level 11b corresponding to the event is "06", the display screen information 11c expresses that "display on the screen the power system diagram of the bay C02 and display on the screen "Circuit Breaker Q0 Open" as the message information, and blink Q0 of the bay C02", and the event content 11a has a purpose of transmitting information that the circuit breaker has been opened, so that the control content 11d is empty because there is no need to additionally perform substation device control.

Next, when the event content 11a is "C02:Low Frequency" that means observation of frequency drop at the bay C02, the event level 11b is "10", the display screen information 11c expresses that "display on the screen the power system diagram of the bay C02 and display on the screen "Frequency Drop" as the message information", and the control content 11d is a control command "C02:Q0:Open" indicating open of the circuit breaker Q0 of the bay C02.

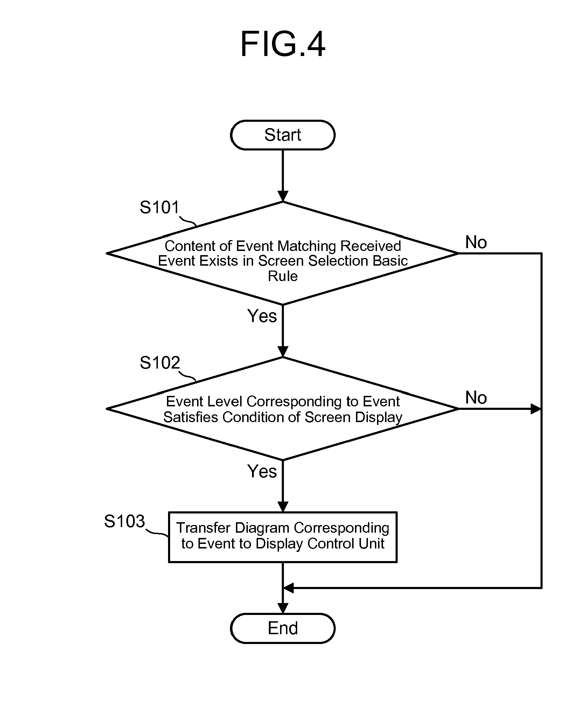

Next, the operation of the screen automatic selection unit 12 will be described in detail referring to Fig. 4. Upon reception of the event 2, the screen automatic selection unit 12 searches for an event content 11a matching the event from the screen selection basic rule storage unit 11 and determines whether there is a matched event content (Step S101 in Fig. 4).

When there is a matched event content as a result of the determination (Yes at Step S101), the screen automatic selection unit 12 then determines whether the event level corresponding to the event satisfies the previously set condition of screen display (Step S102).

When the condition of screen display is satisfied (Yes at Step S102), the screen automatic selection unit 12 analyzes the program code of the character string (information) expressed by the display screen information 11c corresponding to the event 2, and transfers the event content 11a, the event level 11b, and a screen display method analyzed from the display screen information 11c to the display control unit 13 (Step S103).

On the other hand, when the aforementioned condition is not satisfied (No at Step S102), the screen automatic selection unit 12 executes processing until a line satisfying the condition appears. The screen automatic selection unit 12 then searches all of the screen selection basic rules 11 and ends the processing at the point in time when there is no line satisfying the condition.

Next, the operation of the display control unit 13 will be described in detail referring to Fig. 3. The display control unit 13 calls the event content 11a, the event level 11b, and the screen display method interpreted by the screen automatic selection unit 12 which have been transferred from the screen automatic selection unit 12, and converts them into a screen image based on the called screen display method and automatically displays the screen image on the display screen 3.

For example, Fig. 3 is a screen image when receiving events "C02:Low Frequency (frequency drop is observed at the bay C02)" and "C02:Q0:Open (the circuit breaker Q0 of the bay C02 is open)" in sequence. A display screen 30 illustrated in Fig. 3 indicates the power system diagram of the part of the bay C02, and a bay name 3a, a busbar 3b, a disconnecting switch 3c such as a circuit breaker Q1, a circuit line 3d of a circuit breaker Q2, a disconnecting switch 3e such as a circuit breaker Q0, a message information screen 3f, message information 3g and so on are illustrated in the power system diagram.

In the display screen 30 in Fig. 3, it is found from the display in the message information screen 3f that frequency drop has been observed at the bay C02 first on 09/07/01 03:00:20:567. Similarly, it is found that the circuit breaker Q0 has been opened at the bay C02 on 09/07/01 03:00:22:901. In this event, the circuit breaker Q0 is blinking.

The information displayed on the display screen 30 of the monitor 3 shifts as follows. First, at the point in time of receiving the event of the frequency drop at the bay C02, the screen of the power system diagram is displayed based on the display screen information corresponding to the event "display on the screen the power system diagram of the bay C02 and display on the screen "Frequency Drop" as the message information" . Thereafter, a message corresponding to the message information 3g in the message information screen 3 f is displayed with day and hour and the bay name added thereto.

Next, at the point in time when receiving the event that the circuit breaker Q0 of the bay C02 is open, the power system diagram screen is kept displayed as it is based on the display screen information corresponding to the event "display on the screen the power system diagram of the bay C02, display on the screen "Circuit Breaker Q0 Open" as the message information, and blink the circuit breaker Q0 of the bay C02".

Subsequently, the message corresponding to the message information 3g in the message information screen 3f, the day and hour, and the bay name are displayed. Lastly, to indicate that the circuit breaker Q0 has been opened, the circuit breaker Q0 is blinked. The above is the shift of the operation in the example of the display screen 30 in Fig. 3.

For supervising the operation status of the devices in the substation and performing reaction or operation of the devices according to occurred events, the operator conventionally looks at the alarm or the text display on the screen to grasp the status of the devices and then performs operation in case of occurrence of various events occur, so that a delay until grasping the situation and erroneous grasp of the situation are possibly made depending on the skill of the operator.

On the other hand, in the substation control and monitoring system of the first embodiment, the wiring diagram or layout diagram of the bay including the device which is to be referred to based on the event occurring from a device in the substation or each of the units constituting the computer 1 is automatically called and displayed on the screen of the monitor 3. Further, when the notified event is an event requiring control of the device in the substation, the control is also executed.

As described above, by providing an information presenting function for the operator to grasp the situation when the state of each device in the substation has changed, the operator can understand the status of the device in which the event has occurred independent of the skill of the operator from the wiring diagram displayed on the screen, and perform more accurate operation of the power system. This makes it possible to prevent a mistake in grasping of the operator and a mistake in operation caused therefrom, thereby improving in affinity between the operator performing operation and the computer 1. This also makes it possible to operate more quickly and more accurately the substation device than by the conventional screen display by the text.

As a result of this, the operator operating the substation device can perform the task of operating the power system based on the screen according to the situation.

### (Second Embodiment)

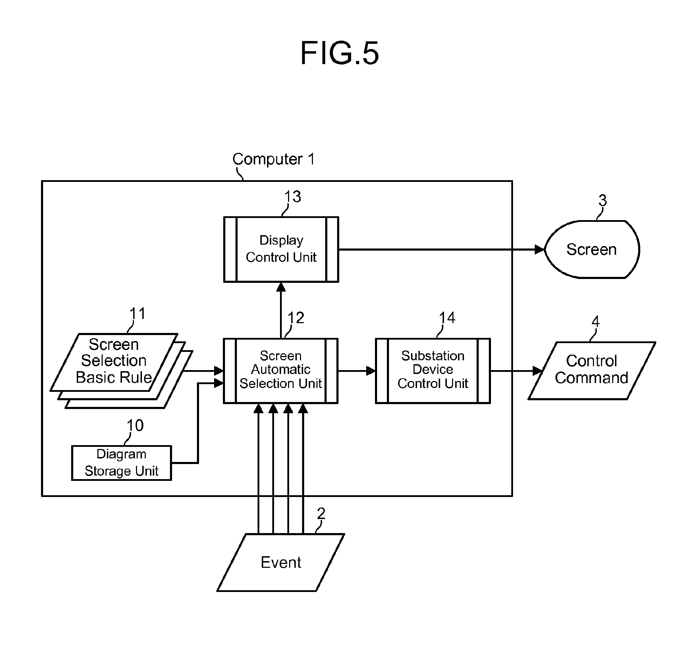

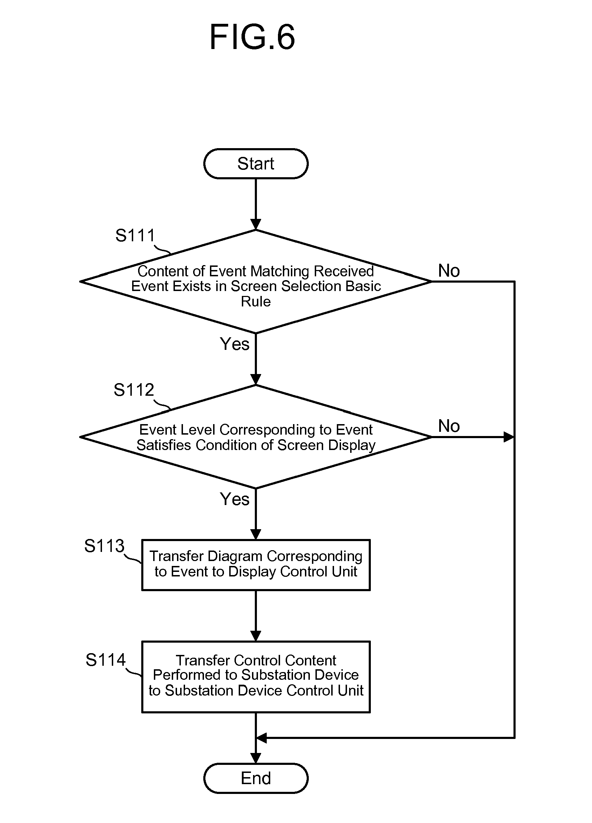

A substation control and monitoring system of a second embodiment will be described referring to Fig. 5 and Fig. 6. Note that the same numerals are given to the same configurations as those in the first embodiment, and the overlapping description will be omitted.

In the second embodiment, a substation device control unit 14 is provided. When a change in state has occurred in the event 2 received from the circuit breaker in the substation, the substation device control unit 14 performs control of a relevant device. More specifically, when device control is necessary from the received event, the substation device control unit 14 outputs a control command according to the control content to be performed to the relevant device.

As illustrated in Fig. 5, this embodiment is constituted of the substation device control unit 14 for conversion into a control command 4 that can be recognized by the substation device in addition to the configurations in Fig. 1.

The substation device control unit 14 is provided in addition to components in the first embodiment, so that when the screen automatic selection unit 12 calls the diagram as illustrated in Fig. 6, the content of the received event matches the screen selection basic rule (Yes at Step S111), and as a result of determination whether the event level of the event satisfies the condition of screen display (Step S112) and when the condition is established (Yes, at Step S112), the screen automatic selection unit 12 calls the content of screen display such as the wiring diagram or layout diagram of the bay from the diagram storage unit 10 and transfers it to the display control unit 13 (Step S113) and selects a control content 11d to be performed on the device in the substation and transfers it to the substation device control unit 14 (Step S114).

After the control content is transferred from the screen automatic selection unit 12 to the substation device control unit 14, the substation device control unit 14 converts the control content 11d into the control command 4 which can be recognized by the device in the substation and sends it to the relevant device to control the device.

As described above, according to the substation control and monitoring system of the second embodiment, the control content selected based on the rule is automatically executed even when the control of the device in the substation needs to be performed depending on the event content, thus making it possible to reduce the influence on the substation device due to an error in determination of the operator. This makes it possible to reduce the operation by the operator when an event has occurred in the substation, resulting in easier operation of the substation by the operator than before.

As a result, control of the substation device according to the event content can be performed when necessary in addition to the automatic screen display when an event has occurred which has been described in the above-described first embodiment.

### (Third Embodiment)

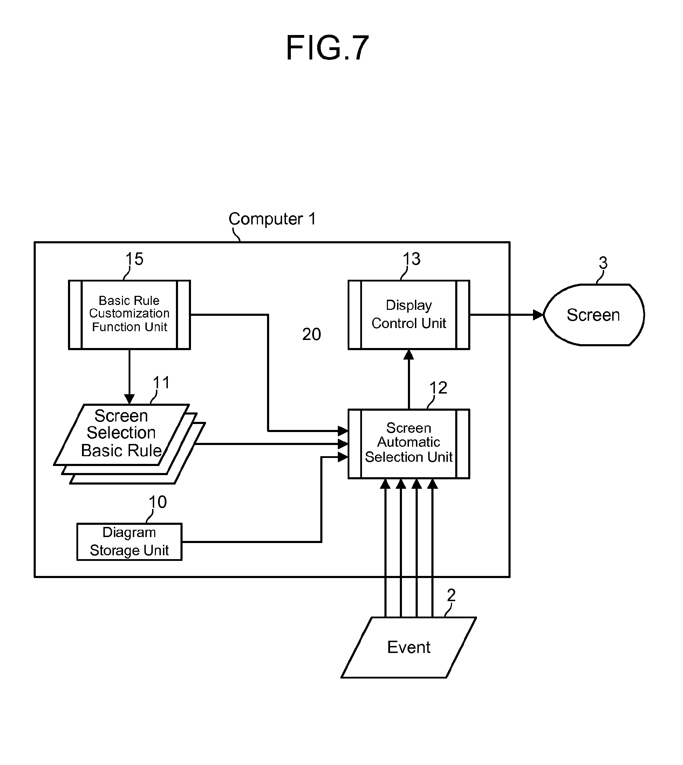

A substation control and monitoring system of a third embodiment will be described referring to Fig. 7, Fig. 8, and Fig. 9. Note that the same numerals are given to the same configurations as those in the first embodiment, and the overlapping description will be omitted.

As illustrated in Fig. 7, a basic rule customization function unit 15 is provided in the third embodiment. The basic rule customization function unit 15 is a function to perform rule change when a change of the screen selection basic rule storage unit 11 becomes necessary. More specifically, the basic rule customization function unit 15 displays an operation screen for changing the setting of the screen selection basic rule stored in the screen selection basic rule storage unit 11, and changes the setting of the screen selection basic rule by performing a change operation on the operation screen.

In the computer 1, when the basic rule customization function unit 15 is activated, the basic rule customization function unit 15 calls the content (screen selection basic rule) in the screen selection basic rule storage unit 11, makes a change to the contents of the event level 11b, the screen display information 11c, and the control content 11d that are information pieces corresponding to the event content 11a of the screen selection basic rule illustrated in Fig. 2, and updates the content saved in the screen selection basic rule storage unit 11.

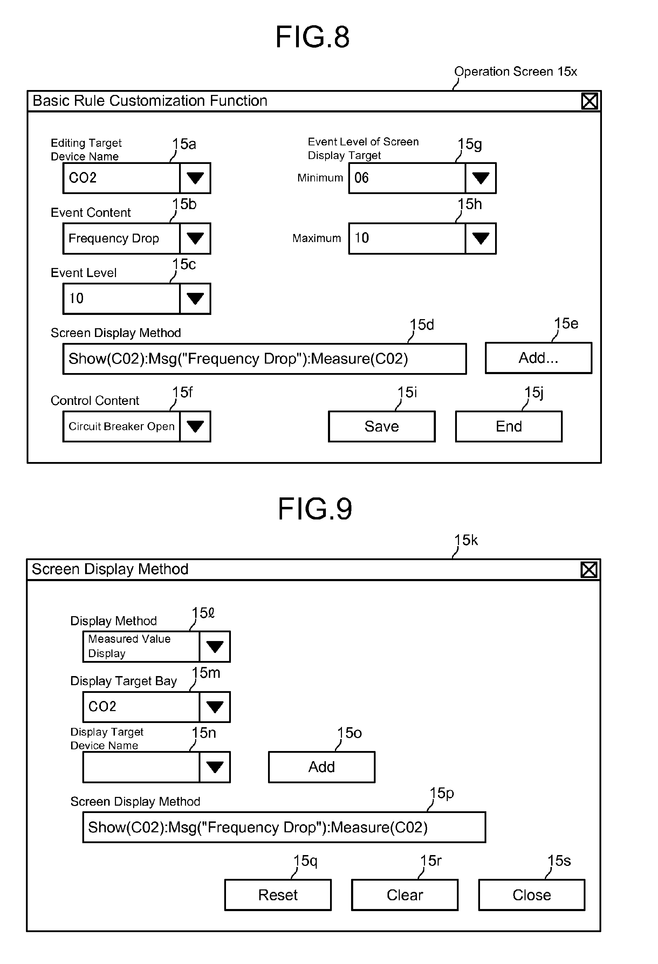

Next, the operation of the basic rule customization function unit 15 will be described in detail referring to Fig. 8 and Fig. 9. The basic rule customization function unit 15 displays an operation screen 15x illustrated in Fig. 8.

As illustrated in Fig. 8, the operation screen 15x is constituted of an editing target device name selection combo box 15a, an event content selection combo box 15b, an event level selection combo box 15c, a screen display method display text box 15d, a screen display method addition button 15e, a control content selection combo box 15f, a screen display target event level (minimum) selection combo box 15g, a screen display target event level (maximum) selection combo box 15h, a save button 15i, and an end button 15j. In the initial state, the editing target device name selection combo box 15a, the screen display target event level (minimum) selection combo box 15g, the screen display target event level (maximum) selection combo box 15h, and the end button 15j are displayed, and a change operation of the rule (information) set as the above-described items can be performed.

By setting, for example, the event level of the screen display target in the operation screen 15x, the screen automatic selection unit 12 can decide the range of the level of the event for automatic call of the diagram.

After the device name of the editing target is selected by the editing target device name selection combo box 15a, the basic rule customization function unit 15 calls the screen selection basic rule saved in the screen selection basic rule storage unit 11 corresponding to the selected device name, thereby making it possible to operate the event content selection combo box 15b, the event level selection combo box 15c, the screen display method addition button 15e, and the control content selection combo box 15f.

When the operator performs an operation of pressing the screen display method addition button 15e when the text displayed in the screen display method display text box 15d is in a state as illustrated, for example, in Fig. 8, a screen display method addition screen 15k as illustrated in Fig. 9 is displayed by the screen automatic selection unit 12.

In the screen display method addition screen 15k, a display method selection combo box 151, a display target bay selection box 15m, a display target device name selection box 15n, an addition button 15o, a screen display method display text box 15p, a reset button 15q, a clear button 15r, a close button 15s and so on are displayed.

In the screen display method addition screen 15k in the initial state, the currently set screen display method is displayed (initial display) in the screen display method display text box 15p. When the operator selects a display method in the display method selection combo box 151, the screen automatic selection unit 12 makes the display target bay selection box 15m and the display target device name selection box 15n selectable.

When a display method not requiring selection of a bay or a device name is selected, the screen automatic selection unit 12 makes the combo box requiring no selection inactive to disable input operation.

When the operator performs an operation of pressing the addition button 15o in the setting state of the screen display method addition screen 15k in Fig. 9, the screen automatic selection unit 12 adds functions corresponding to the settings of the display method, the target bay and the target device name to the screen display method display text box 15p.

The example of the screen display method addition screen 15k in Fig. 9 is a state where the functions have been added. When the operator presses the reset button 15q in this state, the screen automatic selection unit 12 returns the screen display method display text box 15p to the state before the addition button 15o is pressed. Further, when the operator presses the clear button 15r, the screen automatic selection unit 12 clears the content in the screen display method display text box 15p.

When the operator presses the close button 15s, the screen automatic selection unit 12 closes the screen display method addition screen 15k, and reflects the screen display method in the screen display method display text box 15d in the operation screen 15x of the basic rule customization function.

In the third embodiment, after the function (Measure(C02)) indicating measured value information observed at the bay C02 is added, the close button 15s is subsequently pressed to shift to the state in Fig. 8.

The example of the operation screen 15x in Fig. 8 indicates such setting that "the editing target device name is the bay C02, and the event content of the editing target is "Frequency Drop"". The event level is "10", the screen display method is display of the power system diagram of the bay C02 on the screen, "Frequency Drop" is displayed on the screen as the message information, and the control content is "Circuit Breaker Open".

The setting is also made such that "the event level of the screen display target is "06" to "10"". After the editing of the information corresponding to the event content is performed, the save button 15i is pressed to reflect the edited content in the screen selection basic rule 11. When the end button 15j is pressed without performing the save operation, the edited content is discarded.

As described above, according to the substation control and monitoring system of the third embodiment, the screen display rule existing for each device can be changed without directly making alteration to a file when operating the devices in the substation. In particular, the screen display method often includes an expression unique to the system such as functions in its expression and is thus susceptible to inputting error, which can be prevented by selecting and setting by using the combo box and the like.

This makes it possible to reduce the working time and load relating to the setting and change of the screen display rule at setting change and specification change of the substation by a customer and an engineering company for management of the substation. As a result, the screen selection basic rule 11 for each device can be changed using the basic rule customization function unit 15 like the screens in Fig. 8 and Fig. 9.

### (Fourth Embodiment)

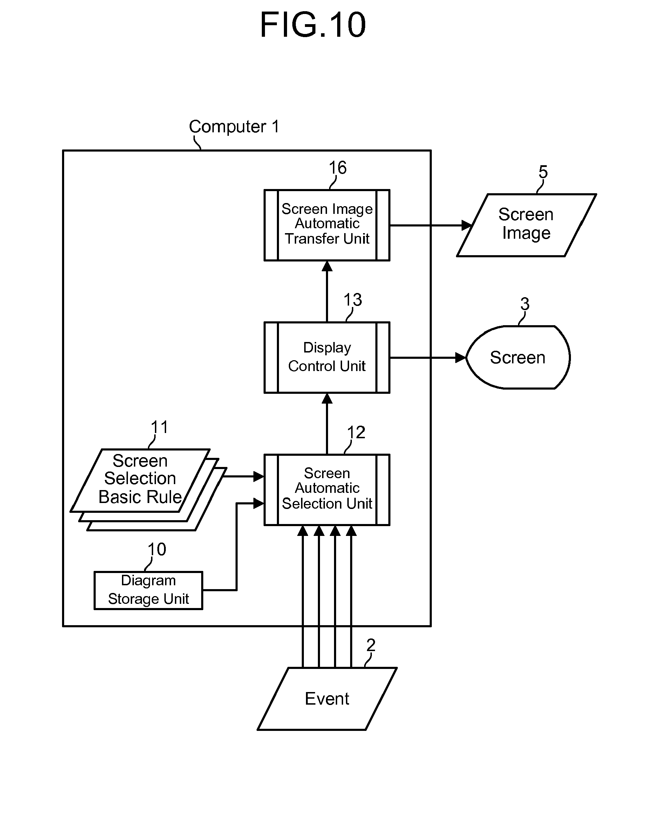

A substation control and monitoring system of a fourth embodiment will be described referring to Fig. 3 and Fig. 10. Note that the same numerals are given to the same configurations as those in the first embodiment, and the overlapping description will be omitted.
In this fourth embodiment, a screen image transfer unit 16 is provided in a computer 1. When an event 2 has occurred in a circuit breaker in a substation, the screen image transfer unit 16 transfers its screen image.

Here, the operation of the screen image automatic transfer unit 16 will be described. As illustrated in Fig. 10, in the fourth embodiment, the computer 1 has the screen image automatic transfer unit 16 that transfers a screen image 5 which has been automatically converted by a display control unit 13, to an upper control station or control center in addition to the configurations in Fig. 1.

In this case, the screen image automatic transfer unit 16 calls a wiring diagram or layout diagram of a target of an event from a diagram storage unit 10 and automatically converts the diagram into data (this is referred to as the "screen image 5") in a format transferable to the upper control station or control center, such as a bit map or JPEG, in addition to the operation in the first embodiment.

The screen image automatic transfer unit 16 transfers the screen image 5 which has been converted into a transferable format, to an e-mail address or a facsimile number of a predetermined upper control station or control center as a destination.

In the fourth embodiment, the screen image automatic transfer unit 16 calls a wiring diagram or layout diagram from the diagram storage unit 10, converts the called diagram data into data in the transferable format, and then automatically transfers the converted data to the predetermined destination and at a predetermined timing.
The timing of the automatic transfer includes the time when an event with a high importance level has occurred and the time when there is a request from the upper control station or control center. Further, the format of the screen image 5 is the same as that of the screen image in Fig. 3.

As described above, according to the substation control and monitoring system of the fourth embodiment, only necessary information of the screen which has been automatically displayed in the substation control and monitoring system is transferred at required timing, whereby an operator in the upper control station or control center can confirm the necessary screen displayed at the substation at the required timing, thus reducing the operation of extracting the necessary information from the screen by following the information with eyes.

### (Fifth Embodiment)

A substation control and monitoring system of a fifth embodiment will be described referring to Fig. 3, Fig. 11, Fig. 12, and Fig. 13. Note that the same numerals are given to the same configurations as those in the first embodiment, and the overlapping description will be omitted.

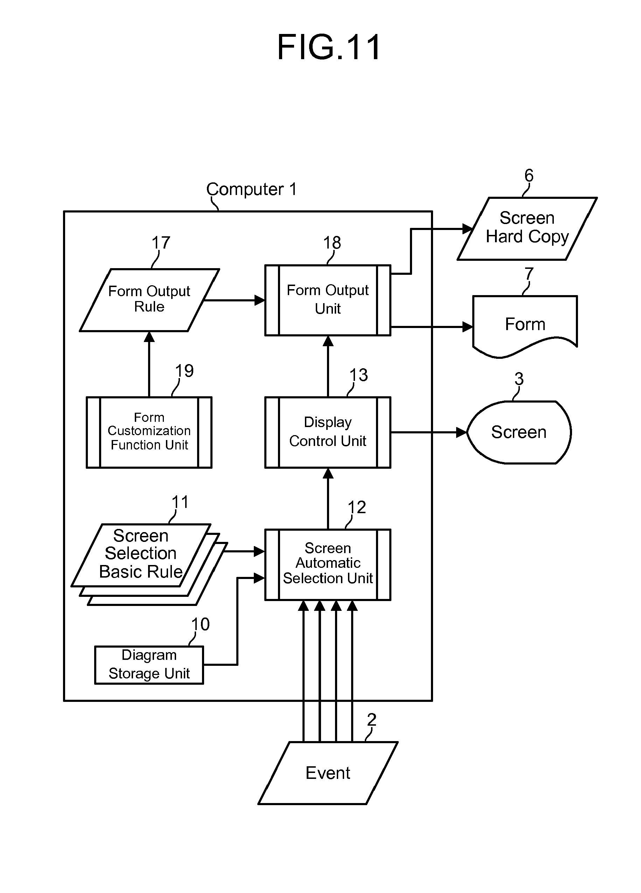

As illustrated in Fig. 11, a computer 1 of the substation control and monitoring system of the fifth embodiment includes a form output rule storage unit 17, a form output unit 18, and a form customization function unit 19, in addition to the configurations in Fig. 1.

In the form output rule storage unit 17, contents (form output rules) of print setting such as an event level that is a target of outputting a form, a form automatic output frequency of automatically outputting a form, a form automatic output time for automatically outputting a form, a screen of a print target, a screen hard copy file of a save target, and a save destination folder name of the file and so on are saved.

The form output unit 18 performs processing of outputting a form when an event 2 has occurred from a circuit breaker in a substation. The form customization function unit 19 is a form customization function to change the content of the print setting in the form output rule storage unit 17, and displays an operation screen 19x for form customization.

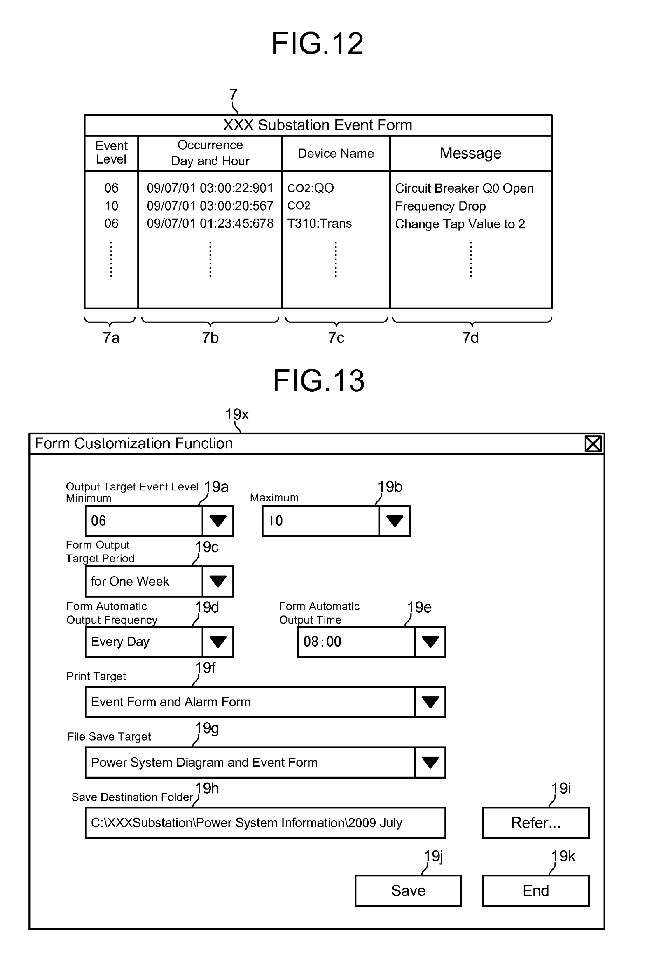

As illustrated in Fig. 13, an output target event level (minimum) selection combo box 19a, an output target event level (maximum) selection combo box 19b, a form output target period selection combo box 19c, a form automatic output frequency selection combo box 19d, a form automatic output time selection combo box 19e, a print target selection combo box 19f, a file save target selection combo box 19g, a save destination folder display text box 19h, a reference button 19i, a save button 19j, an end button 19k and so on are displayed in the operation screen 19x.

By setting the output target event level in the output target event level (minimum) selection combo box 19a and the output target event level (maximum) selection combo box 19b, the range of the event level of a screen hard copy 6 and a form 7 which are outputted by the form output unit 18 can be decided. It is possible to perform setting to output the form 7 for a certain period (for example, for one day or for one week) by the form output target period selection combo box 19c.

By setting the frequency of automatic output of the form 7 in the form automatic output frequency selection combo box 19d and the time of automatic output of the form 7 in the form automatic output time selection combo box 19e, it is possible to output the form 7 at a set timing every time. In the print target selection combo box 19f, a screen to be outputted as the form 7 can be selected.

In the file save target selection combo box 19g, a screen to be outputted as the screen hard copy 6 and to be saved in a specific folder of the computer can be selected.

The save destination folder display text box 19h displays a path of the save destination folder of the screen hard copy 6. By pressing the reference button 19i to designate a reference destination folder, the save destination folder can be changed.

In the substation control and monitoring system of the fifth embodiment, when the form output unit 18 receives a screen image which has been automatically converted by the display control unit 13, the form output unit 18 outputs a hard copy 6 of the screen and a form 7 according to the form output rule for saving the event level that is a target of outputting a form, the form automatic output frequency of automatically outputting a form, the form automatic output time for automatically outputting a form, the screen of a print target, the screen hard copy file of a save target, and the save destination folder name of the file.

More specifically, the form output unit 18 automatically converts the received screen image into a file format such as a bit map according to the print setting saved in the form output rule storage unit 17 to generate the image hard copy 6, or outputs the received screen image as the form 7.

In addition to the above, when the content of the print setting of the form output rule storage unit 17 is changed, the form customization function unit 19 is activated to display a screen for operating the form customization function, and customizes the content of the print setting through the screen. The print setting of a change target includes an output target event level, an automatic output frequency, an automatic output time, a sort method, and an output format. The form customization function unit 19 reflects the change in the form output rule storage unit 17 by performing decision operation after the operator makes a change to those items by a screen operation.

The display format of the screen hard copy 6 is the same as that in Fig. 3. Further, Fig. 12 is an output example of the form 7. Columns illustrated in Fig. 12 are an event level 7a, an event occurrence day and hour 7b, a device name 7c, and a message 7d. The event level 7a, the device name 7c, and the message 7d are displayed according to the content of the screen selection basic rule 11. Further, the screen hard copy 6 and the form 7 are outputted according to the content of the form output rule storage unit 17.

Note that in the fifth embodiment, the screen hard copy 6 is saved in the save destination folder by the form output unit 18 when an event with a high importance level has occurred and when there is a request from an operator operating the substation.

In the example of the operation screen 19x in Fig. 13, an event form and an alarm form for one week for events of "06" to "10" are printed at 08:00 every day. Further, the target of saving a file as the screen hard copy is a power system diagram and an event form, and "C:¥XXXSubstation¥Power System Information¥2009 July" is set in the save destination folder.

Here, the alarm form means a form specialized to an event with a high importance level. By pressing the save button 19g after editing the information, the edited content is reflected in the form output rule storage unit 17. When the end button 19h is pressed without performing save operation, the edited content is discarded.

As described above, according to the substation control and monitoring system of the fifth embodiment, the period and timing to output the form, the form of output target, the hard copy of save target, and its save destination can be edited in the substation control and monitoring system. This enables the operator operating the substation device to automatically acquire only necessary information in a screen image (bit map file or JPEG file) or a format of document at a set timing, leading to simple and easy management of the form for the operator.

The above configuration makes it possible to output the screen hard copy 6 and the form 7 according to the event level of the output target saved in the form output rule storage unit 17, the form customization function unit 19 capable of changing the form output target period, the form automatic output frequency, the form automatic output time, the print target, the file save target and the save destination folder, and the form output rule in the form output rule storage unit 17 according to the setting.

### (Sixth Embodiment)

A substation control and monitoring system of a sixth embodiment will be described referring to Fig. 2, Fig. 8, Fig. 9, Fig. 13, and Fig. 14. Note that the same numerals are given to the same configurations as those in the first embodiment, and the overlapping description will be omitted.

In this sixth embodiment, other than a computer 1, a terminal for remote operation connected to the computer 1 via a network is provided. The terminal is arranged, for example, in an upper control station or control center. The computer 1 is installed, for example, at an installation location of an electric power facility far from the control station or control center (such as a substation in a mountainous region).

The terminal includes a basic rule remote customization function unit 8 from the upper control station or control center and a form remote customization function unit 9 from the upper control station or control center when a change in content stored in a screen selection basic rule storage unit 11 becomes necessary.

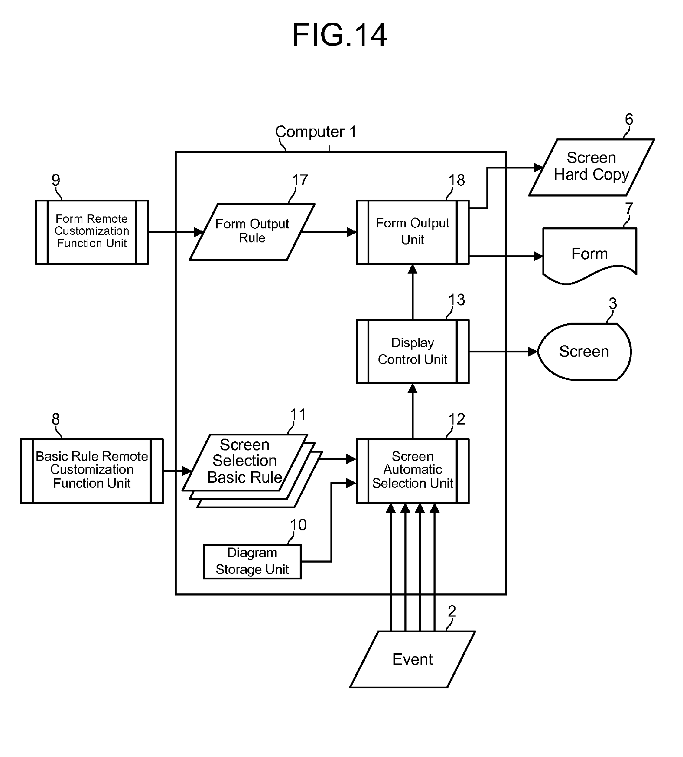

Specifically, the substation control and monitoring system of the sixth embodiment has, as illustrated in Fig. 14, the basic rule remote customization function unit 8 that remotely changes the content saved in a screen selection basic rule storage unit 11 from the upper control station or control center, and the form remote customization function unit 9 that similarly remotely changes the content saved in a form output rule storage unit 17, in addition to the configurations of the computer 1 in Fig. 11.

The basic rule remote customization function unit 8 provides a basic rule remote customization function from the upper control station or control center when a change in content stored in the screen selection basic rule storage unit 11 becomes necessary. Further, the form remote customization function unit 9 provides a form remote customization function from the control station or control center when a change in content of print setting in the form output rule storage unit 17 becomes necessary.

The operation of the basic rule remote customization function unit 8 will be described in detail referring to Fig. 8 and Fig. 9. The operation screen and the operation method of the basic rule remote customization function unit 8 are the same as the operation method of the basic rule customization function unit 15 described in the third embodiment, as illustrated in Fig. 8 and Fig. 9.

In the terminal in the upper control station or control center, when the basic rule remote customization function unit 8 is activated, the basic rule remote customization function unit 8 connects to the computer 1 via the network and acquires the content in the screen selection basic rule storage unit 11. When an end operation is performed after completion of the change operation of the screen selection basic rule, the basic rule remote customization function unit 8 reflects the changed content of the basic rule in the screen selection basic rule storage unit 11 and disconnects from the computer 1.

Next, the operation of the form remote customization function 9 will be described in detail. The operation screen of the form remote customization function 9 is the same as the operation screen 19x illustrated in Fig. 13, and its operation method is the same as the operation method of the form customization function unit 19 described in the fifth embodiment.

As in the basic rule remote customization function unit 8, when the form remote customization function unit 9 is activated in the terminal, the form remote customization function unit 9 connects to the computer 1 via the network and acquires the content in the form output rule storage unit 17. When an end operation is performed after completion of the operation of the content of print setting, the form remote customization function unit 9 reflects the changed content in the form output rule storage unit 17 and disconnects from the computer 1.

As described above, according to the substation control and monitoring system of the sixth embodiment, for example, the terminal in the upper control station or control center includes the basic rule remote customization function unit 8 and the form remote customization function unit 9, connects to the computer 1 in the substation constructed in the mountainous region from the terminal via the network to remotely operate the computer 1 and supervise the devices in the substation, thereby making it possible to change the basic rule and the setting of the form output without the operator in the upper control station or control center going to the substation.

In particular, the substation is often constructed at a location with transportation difficulty such as in the mountainous region and is often far from the upper control station or control center. Therefore, the transportation of the operator to the substation can be reduced. This makes it possible to reduce the working time and load relating to the setting and change of the screen display rule and the form output rule at setting change and specification change of the substation as well as to reduce time cost required for the transportation of the operator from the upper control station or control center to the substation.

As described above, the screen selection basic rule 11 for each device and the form output rule of the form output rule storage unit 17 can be changed by remote operation using the basic rule remote customization function unit 8 and the form remote customization function 9 respectively from the upper control station or control center.

Note that the present invention is not limited to the above embodiments, but its components may be modified at implementation stage without departing from its scope. For example, the components may be realized by a program installed in a storage such as a hard disc drive of a computer, or the program may be stored in computer-readable electronic media and the computer may read the program from the electronic media to realize the functions of the present invention.

The electronic media include, for example, recording media such as a CD-ROM and the like, flash memory, removable media and so on. Further, the components may be stored in a distribution manner in different computers connected to one another via a network and may be realized by communicate among the computers in which the components are working.

### EXPLANATION OF NUMERALS AND SYMBOLS

1 ... computer, 2 ... event detection unit, 3 ... monitor, 4, ... control command, 5 ... screen image, 6... screen hard copy, 7 ... form, 8 ... basic rule remote customization function unit, 9 ... form remote customization function, 10 ... diagram storage unit, 11 ... screen selection basic rule storage unit, 12 ... screen automatic selection unit, 13 ... display control unit, 14 ... substation device control unit, 15 ... basic rule customization function unit, 16 ... screen image automatic transfer unit, 17 ... form output rule storage unit, 18 ... form output unit, 19 ... form customization function unit.

## Claims

1. An electric power facility control and monitoring system, comprising:
a rule storage unit configured to have an identifier of a device where the event has occurred, an operation status of the device, a numerical value indicating an importance level of the operation status of the device, and a control content for the device set as a rule relating to an event occurring in a power station;
a diagram storage unit configured to store a wiring diagram or layout diagram of the device in the power station for each circuit;
an automatic selection unit configured to retrieve from the diagram storage unit the wiring diagram or layout diagram of a section of a bay upon a reception of notification of the event occurred in the power station, the wiring diagram or layout diagram including an identifier of a device included in a rule in the rule storage unit matched to a content of the event notification; and
a display control unit configured to output to a monitor the wiring diagram or layout diagram retrieved by the automatic selection unit.

2. The electric power facility control and monitoring system according to claim 1, further comprising
a substation device control unit configured to output to the device a control command according to a content of control to be performed when device control is necessary from the received event.

3. The electric power facility control and monitoring system according to claim 1, further comprising
a basic rule customization function configured to display an operation screen for changing setting of the rule stored in the rule storage unit and change the setting of the rule by a change operation to the operation screen.

4. The electric power facility control and monitoring system according to claim 1, further comprising
a screen image automatic transfer unit configured to transmit the wiring diagram or layout diagram to an e-mail address or a facsimile number of a predetermined upper control station or control center.

5. The electric power facility control and monitoring system according to claim 1, further comprising
a form output unit configured to output a hard copy of a screen and/or a form according to a set form output rule having an event level that is a target of calling screen information and outputting a form, an output target period of a form, an automatic output frequency of automatically outputting a form, an automatic output time of automatically outputting a form, information on a print target, and information on a file save target.

6. The electric power facility control and monitoring system according to claim 5,
wherein the form output unit further comprises:
a form customization function capable of freely changing the event level of a form output target, the output target period of a form, the automatic output frequency, the automatic output time, the information on a print target, and the information on a file save target; and
a function to output a hard copy of a screen and/or a form according to a previously set form output rule.

7. The electric power facility control and monitoring system according to claim 3, further comprising
a basic rule remote customization function to change a content stored in the rule storage unit by remote operation for the basic rule customization function.

8. The electric power facility control and monitoring system according to claim 6, further comprising
a form remote customization function to change the form output rule by remote operation for the form customization function.
